# EUROPEAN PATENT SPECIFICATION

(11) **EP 1 269 006 B1**
(45) Date of publication and mention of the grant of the patent: **12.01.2005**
(21) Application number: 01922485.6
(22) Date of filing: 19.03.2001
(51) Int. Cl.: F02M 27/02, F02M 25/07, F02B 43/00

(54) **GAS POWERED ENGINE HAVING IMPROVED EMISSIONS**
GASBETRIEBENE MASCHINE MIT VERBESSERTEN ABGASEN
MOTEUR GAZ AUX MISSIONS AM LIOR ES

(30) Priority: 03.04.2000 US 541540; 03.04.2000 US 541541; 03.04.2000 US 541542
(43) Date of publication of application: 02.01.2003
(73) Proprietor: Collier Technologies, Inc., Reno, Nevada 89502 (US)
(72) Inventor: Collier, Kirk R., Reno, Nevada 89511 (US)
(74) Representative: Müller, Wolfram Hubertus, Dr. Dipl.-Phys.
(86) International application number: PCT/US2001/008844
(87) International publication number: WO 2001/075294

(56) References cited:
- EP-A- 0 878 615
- DE-A- 3 048 540
- DE-A- 3 413 419
- JP-A- 61 171 870
- US-A- 5 081 977
- US-A- 5 787 864

## Description

### BACKGROUND OF THE INVENTION

This invention relates to gaseous fuel powered internal combustion engines and more particularly it relates to a method of operating an internal combustion engine using reformed natural gas to produce exhaust gas having near-zero NOₓ.

Natural gas is considered an excellent source of fuel for an internal combustion engine because it burns cleaner and there exist large reserves of natural gas. However, the use of natural gas to fuel internal combustion engines is not without problems. For example, there is no easy method of refueling vehicles employing natural gas. Further, natural gas requires more fuel tank volume to obtain equivalent miles when compared to diesel or gasoline powered vehicles. In addition, the use of natural gas for fuel for an internal combustion engine can result in exhaust emission problems requiring combinations of exhaust gas recirculation, positive crankcase ventilation, and catalytic converters to care for the various compounds in the exhaust gases. For example, U.S. Patent Nos. 5,660,602; 5,666,923 and 5,787,864 disclose alternative gaseous fuels for operating a combustion engine including approximately 21 to 50% hydrogen and the rest natural gas constituents such as combinations of methane, carbon dioxide, nitrogen, ethane, propane, iso-butane, n-butane, iso-pentane, n-pentane, and hexanes plus. Current production engines can use such alternative fuels under lean burn conditions with emissions that are below current legal standards without any substantial modifications.

Methanol can be reformed, producing hydrogen for use with gasoline for internal combustion engines to reduce noxious components. For example, U.S. PatentNos. 4,244,328 and 4,340,013 disclose an improved process and apparatus for preparing a gaseous mixture of hydrocarbon and carbon monoxide to be supplied to the air/fuel mixture of a combustion engine. The process and apparatus are useful in reducing the amount of noxious components and aldehydes in the engine exhaust gas. An improved process and combustion engine for reducing the noxious components and aldehydes are described.

U.S. Patent No. 4,147,136 discloses a fuel reforming system for an internal combustion engine which has a fuel reforming reactor to be supplied with a hydrocarbon fuel. The reactor contains a catalyst carrier and a catalyst thereon to be heated for facilitating a conversion of the fuel into a reformed gaseous mixture rich with hydrogen. The mixture is fed into the engine. The catalyst is periodically alternately exposed to the fuel and air so that carbon produced and deposited on the catalyst during the fuel reforming reaction facilitated by the catalyst is burnt away whereby the catalytic performance of the catalyst is restored to ensure a prolonged operative life thereof. The reformed gaseous mixture assures a reliable ignition and combustion of a mixture thereof with air in the engine at a very lean air to fuel ratio to advantageously decrease the emission of harmful exhaust gas components.

U.S. Patent No. 4,476,817 discloses a combustion and pollution control system wherein a controlled amount of a fluid (steam or water or a solution of water plus additives) is injected into an internal combustion engine to improve combustion, efficiency, and to reduce emissions. The amount of the fluid injected is controlled in response to engine need. The steam is generated by the heat produced by the engine. The combustion gas temperature is used to control the amount of steam produced by varying the fluid flow through one or more fixed or variable orifice control valves. The stream is injected in a piston engine to cool peak temperatures, to prevent detonation and pre-ignition, to smooth out hot spots, to prevent auto-ignition or dieseling, and to use the vapor energy in the expansion cycle to increase low speed torque and acceleration. The steam is used to cause full retard of the vacuum spark advance during acceleration at full load from low speed, and a large amount of steam is injected at this point in the cycle to prevent pre-ignition and detonation. Ultrasonic energy is added to the injected steam to produce better mixing and distribution. Hydrogen is also injected to permit better combustion with higher amounts of air. The hydrogen is produced by the interaction of a catalyst with the steam and fuel hydrocarbons and ultrasonic energy. At times exhaust gas and other additives, such as hydrogen peroxide, methyl alcohol, and ammonia are injected.

U.S. Patent No. 4,318,369 discloses a recyclable-fuel engine system designed for use in a vehicle. The system includes a hydrogen-producing catalytic unit having plural catalytic beds and a hydrogen-fueled engine having combustion and exhaust chambers. The catalytic beds, when supplied with heat, catalyze a reduced form of a hydrocarbon carrier to hydrogen and a dehydrogenated form of the carrier. One of the catalytic beds is supplied heat by direct heat transfer from the engine's exhaust chamber. The remaining catalytic beds are supplied heat by heat pipes receiving heat from the combustion and exhaust chambers. The hydrogen produced in the catalytic unit is supplied to the engine, to power the same. Also disclosed are an apparatus and a method for regenerating the catalytic beds periodically.

U.S. Patent No. 4,425,876 discloses a method of fuel treatment and distribution for an internal combustion engine including the steps of operating an adiabatic reactor without a substantial amount of exhaust heat within an operational temperature range, the catalyst bed reactor including a partial combustion catalyst and a dissociation catalyst. A substantial amount of engine exhaust heat is provided to an endothermic reactor having an endothermic dissociation catalyst therein and liquid alcohol is vaporized to form alcohol vapor. The alcohol vapor is mixed with air to form a partial combustion mixture which is contacted with the partial combustion catalyst whereby a dissociation mixture is formed and heat is evolved. The dissociation mixture and the dissociation catalyst form a hydrogen-rich fuel. The hydrogen-rich fuel and the endothermic dissociation catalyst form a fuel product whereby at least a portion of any residual undissociated alcohol in the hydrogen-rich fuel is dissociated to hydrogen and carbon monoxide using the engine waste heat provided by the exhaust gas.

U.S. Patent No. 4,444,158 discloses a method of methyl alcohol treatment for an automobile internal combustion engine wherein the methyl alcohol is converted to a hydrogen-rich fuel for burning in the internal combustion engine.

U.S. Patent No. 4,475,484 discloses an apparatus for the catalytic transformation of fuel for use with an internal combustion engine. The apparatus comprises a catalytic reactor in the form of a chamber containing catalytic material, and through which liquid or vaporized fuel is passed, the reactor chamber being in close thermal communication with the exhaust gases leaving the internal combustion engine. The reactor chamber is either placed within the exhaust gas chamber of the engine exhaust manifold, or in very close proximity thereto. In a preferred arrangement, there are two reactor chambers in series, one formed within the exhaust manifold of the engine, and the other mounted closely adjacent thereto.

U.S. Patent No. 4,547,356 discloses a method for generating hydrogen. The system includes a reactor that has reaction zones wherein a catalyst generates hydrogen from steam at elevated temperatures. The zones in the reactor are in the form of tubes about a heat generating chamber, and the zones are adapted to be interconnected to each other, to the atmosphere, and to a steam source, all to maximize the generation of hydrogen by providing a reactor with optimum flexibility.

U.S. Patent No. 5,156,114 discloses an aqueous fuel for an internal combustion engine. The fuel has from about 20 percent to about 80 percent by volume of water, and a carbonaceous fuel such as ethanol, methanol, gasoline, kerosene fuel, diesel fuel, carbon-containing gaseous or liquid fuel, diesel fuel, carbon-containing gaseous or liquid fuel, or mixtures thereof. A method for combusting an aqueous fuel in the presence of a hydrogen producing catalyst in an internal combustion engine is provided. The method produces approximately as much power as the same volume of gasoline. The method comprises introducing air and aqueous fuel into a fuel introduction system for the engine.

U.S. Patent No. 5,297,515 discloses an engine which, in at least one cylinder or combustion area, is provided with a hydrocarbon rich fuel which produces upon combustion, an exhaust gas containing unburned hydrocarbons, water vapor and carbon monoxide. The exhaust gas is treated in a catalytic converter and the reaction process that occurs therein produces hydrogen and carbon dioxide which is mixed with air to form a hydrocarbon lean, hydrogen enriched mixture. The mixture is subsequently ignited in other cylinders or combustion areas of the engine to produce power.

U.S. Patent No. 5,488,932 discloses a gaseous fuel-enriching subsystem for an internal combustion engine including a supplemental intake conduit to an intake manifold internal combustion engine. Such supplemental input is provided with numerous apertures therein. An exhaust gas conduit from the internal combustion engine annularly surrounds the intake conduit permitting fuel values from exhaust in the exhaust conduit to enter the supplemental intake conduit through such apertures. A water supply input to the supplemental intake conduit, at an end opposite to the location of the manifold, provides a further fuel input to the supplemental intake conduit in that water from the water supply is evaporated and then hydrolyzed, separating the water into its chemical constituents of hydrogen and oxygen, thusly producing an enriched gaseous fuel mixture with the recycled exhaust gas which is fed to the manifold.

In spite of these disclosures, there is still required a method of operating an internal combustion engine on a gaseous fuel such as natural gas or propane which permits lean burn and which results in the generation of near-zero NOₓ.

### SUMMARY OF THE INVENTION

It is an object of this invention to provide a method of operating an internal combustion engine.

It is another object of this invention to provide an improved method of operating a combustion engine to provide an exhaust gas having near-zero NOₓ using charge dilution by recycling exhaust gas.

It is still another object of the invention to provide an improved method for operating a combustion engine on gaseous fuel such as natural gas or propane or the like to provide an exhaust gas having near-zero NOₓ using charge dilution.

Yet it is another object of the invention to provide an improved method for operating an internal combustion engine on a gaseous fuel such as natural gas or propane including the step of reforming the gaseous fuel to produce hydrogen and carbon monoxide. It is a further object of the invention to provide an improved method for operating an internal combustion engine on a gaseous fuel comprised of natural gas, hydrogen, and carbon monoxide using exhaust gas recycling to produce low NOₓ and lean bum conditions to obtain low carbon monoxide.

These and other objects will become apparent from a reading of the specification and claims appended hereto.

In accordance with these objects, there is provided a method of operating an internal combustion engine comprising providing an internal combustion engine and a source of gaseous fuel such as natural gas or propane for powering the engine. Also, there is provided a reactor in fluid communication with the engine for reforming the gaseous fuel. The natural gas and/or propane is added to the reactor for purposes of converting or reforming a portion of the gaseous fuel to hydrogen and carbon monoxide to provide a gaseous mixture exiting the reactor comprised of methane, and/or propane, hydrogen, steam, nitrogen, carbon dioxide, and carbon monoxide. The gaseous mixture is mixed with air to provide a gaseous fuel mixture and air combination which is introduced to the internal combustion engine and combusted to provide an exhaust gas. A portion of the exhaust gas from the internal combustion engine is recycled and introduced to the reactor for purpose of reforming a portion of the gaseous fuel to hydrogen and carbon monoxide.

Also, in accordance with these objects, there is provided a method of producing near-zero NOₓ and near-zero CO emissions in exhaust gas from an internal combustion engine using a gaseous fuel. The method comprises providing an internal combustion engine having intakes for fuel and air and having exhaust gas. A first portion of the exhaust gas is recycled for adding to the engine air intake. A second portion of the exhaust gas is discharged to the atmosphere. A gaseous fuel comprised of natural gas and at least one additional gas selected from hydrogen and carbon monoxide is provided for adding to the engine. The engine is operated to combust the fuel and the first portion of exhaust gas with air under exhaust gas recycle conditions which produce near-zero NOₓ emissions in the exhaust gas emitted from the engine and under combustion conditions which provide up to 4% oxygen in the exhaust gas emitted from the engine. Carbon monoxide in the second portion of the exhaust gas is oxidized using oxygen and an oxidizing gas catalyst. Thus, the exhaust gas discharged to the atmosphere has both near-zero carbon monoxide emission and near-zero NOₓ emissions.

### BRIEF DESCRIPTION OF THE DRAWINGS

Fig. 1 is a schematic representation of an internal combustion engine that provides exhaust gases having near-zero NOₓ.
Fig. 2 is a schematic representation of a reformer reactor useful in the invention where the exhaust gas is commingled with the fuel, water, and air charge.
Fig. 3 is a schematic representation of a reformer reactor useful in the invention where the exhaust can be withdrawn separately from the reformed fuel.
Fig. 4 is a schematic representation of an internal combustion engine that provides exhaust gases having near-zero NOₓ and near zero CO emissions.
Fig. 5 is a graph illustrating the effectiveness of exhaust gas dilution in using the combination of hydrogen and natural gas to produce near-zero NOₓ emissions.
Fig. 6 is a graph illustrating the effectiveness of hydrogen and carbon monoxide-mixtures in extending lean burn combustion limits to produce near-zero NOₓ.

### DETAILED DESCRIPTION OF THE PREFERRED EMBODIMENTS

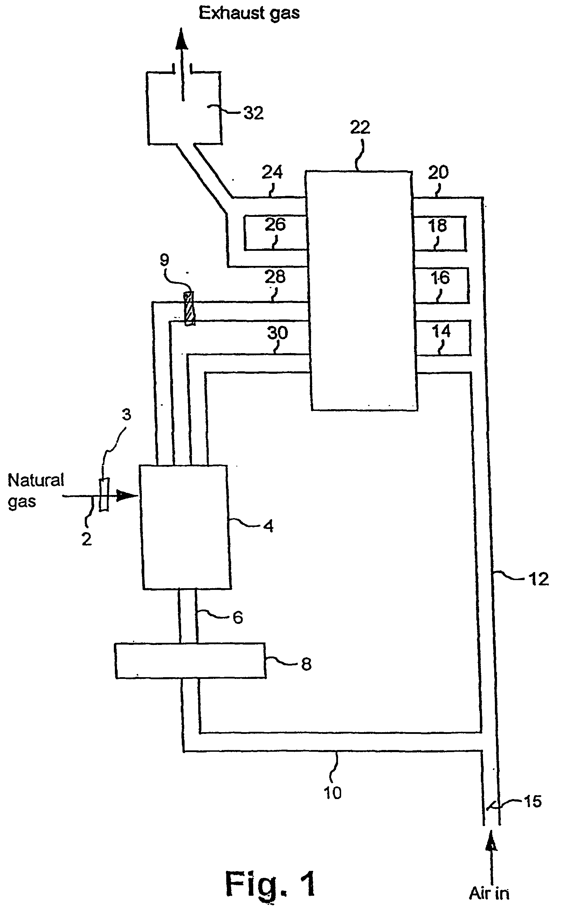

Referring now to Fig. 1, there is shown a first embodiment of a novel method for operating an internal combustion engine on a gaseous fuel such as natural gas or propane gas to produce exhaust gases having near-zero NOₓ. In Fig. 1, the gaseous fuel is introduced along line 2 to a reactor 4 where the gas, e.g., natural gas, is reformed to produce a fuel containing methane, hydrogen, carbon monoxide, and other gases. The fuel is removed from reactor 4 along line 6 and is optionally passed through a heat exchanger 8 which is effective in removing or condensing water therefrom. The fuel is further removed along line 10 to line 12. Air is introduced to line 12 through throttle 14 where the air is mixed with fuel from reactor 4 to provide a combination fuel mixture. The fuel mixture is introduced along intake lines 14, 16, 18, and 20 to a combustion zone of internal combustion engine 22 where the combination fuel mixture is combusted to produce power and exhaust gases. Typically, the internal combustion engine is a reciprocating piston engine.

Fig. 1 illustrates four reciprocating pistons. In the invention, the engine exhaust gases are extracted along lines 24, 26, 28, and 30. In Fig. 1, lines 24 and 26 are shown venting exhaust gases to the atmosphere. However, it should be appreciated that the portion of exhaust gases vented to the atmosphere can be increased or decreased as required. In Fig. 1, lines 28 and 30 are introduced to reactor 4 where the exhaust gases are used to treat the gaseous fuel for purposes of reforming at least a portion of the fuel to produce hydrogen and carbon monoxide. That is, an exhaust gas stream from the internal combustion engine is recycled to reactor 4 where the exhaust gas stream may be mixed with stream 2 of natural gas for the purpose of reforming. Because the exhaust gas contains steam, the natural gas is catalytically steam reformed in the reactor in the presence of the exhaust gases to form a gaseous mixture containing hydrogen and carbon monoxide. Further, because the steam reforming reaction is endothermic, energy required for converting at least a portion of the natural gas to hydrogen and carbon monoxide is supplied by the heat of the exhaust gases introduced from lines 28 and 30. Any methane in the natural gas not reformed is used as fuel in the internal combustion engine. Thus, the present invention is highly effective in permitting operation of an internal combustion engine with an exhaust gas having near-zero NOₓ.

For purposes of producing near-zero NOₓ in the present invention, the gaseous fuel charge submitted to the internal combustion engine is subject to charge dilution when mixed with exhaust gas used for reforming purposes. By introducing additional gases to the combustion process for a given amount of fuel, the heat capacity ofthe gases used in the combustion process is increased. This increase in heat capacity reduces the peak temperature of the combustion process which is very important in producing near-zero NOₓ. In the present invention, the use of exhaust gas to reform fuel by mixing results in dilution of the combustion gases charged to the internal combustion engine. Exhaust gas has a higher heat capacity than an equivalent volume of air. Thus, the use of exhaust gas as a charge dilution gas is more effective in reducing NOₓ emission in an engine because of its higher heat capacity per unit volume compared to air.

However, dilution of the combustion charge to produce near-zero NOₓ has the problem of producing a negative combustion effect referred to herein as misfire. With conventional fuels, misfire will normally occur before sufficient charge dilution gases are incorporated to produce near-zero NOₓ. Thus, it is important to provide a combustible gas in the fuel to eliminate misfire in the engine. In the present invention, a combustible gas mixture that reduces misfire is hydrogen and carbon monoxide which is generated during reforming. That is, the mixture of hydrogen and carbon monoxide generated during reformation of the natural gas eliminates engine misfire under exhaust gas charge dilution to produce near-zero NOₓ.

Additional hydrogen or carbon monoxide may be added to the reformed gaseous fuel, if necessary. Or, if desirable, the reformed gaseous fuel, including recirculated exhaust gas, may be combined with an unreformed fuel such as a separate source of hydrocarbon fuel.

The reformation process may consist only of the steam reformation reaction which is accomplished in the absence of oxygen. The reformation process may also consist of the autothermal reformation reaction. This process is a combination of steam reforming and partial oxidation reforming. The partial oxidation of hydrocarbons to form hydrogen and carbon monoxide requires the presence of oxygen. The oxygen content within the reformer can be controlled by the air to fuel ratio, also called the equivalence ratio (Φ), of the engine. For example, an equivalence ratio of 1.02 will produce from 0 to 0.25% oxygen in the exhaust. An equivalence ratio of 0.98 will produce about 0.5% exhaust oxygen and an equivalence ratio of 0.8 will produce about 4% exhaust oxygen. The amount of exhaust gas oxygen entering the fuel reformer will determine the relative amounts of partial oxidation and steam reforming reactions that contribute to the overall fuel reformation process. Some degree of partial oxidation reformation is beneficial because the reaction is exothermic. The amount of hydrogen and carbon monoxide that can be produced by.the steam reformation process will be limited by the temperature of the reactor. This reactor temperature will be reduced by the amount of thermal energy required by the endothermic steam reformation reaction. This reduction in reactor temperature will limit the amount of hydrogen and carbon monoxide that can be produced. The energy released by the exothermic partial oxidation reaction will keep the reactor temperature high enough to support the amount of steam reformation required to produce adequate hydrogen and carbon monoxide to support charge diluted combustion in the engine.

It is desirable to perform as much steam reformation as possible and to minimize the amount of partial oxidation reformation so that the overall energy efficiency of converting fuel to shaft work from the engine is maximized.

Another aircontaminant that is important to reduce in the exhaust gas is carbon monoxide. Thus, exhaust gases 24 and 26 can be passed through an exhaust catalyst to convert remaining CO to CO₂ to provide near-zero CO. That is, as shown in Fig. 1, exhaust in line 26 is introduced to line 24 and both are passed through an exhaust catalyst 32 to provide an exhaust gas having near-zero CO.

Catalytic converter 32 can be an oxidizing catalyst which converts carbon monoxide to carbon dioxide by reacting with free oxygen in the exhaust before being discharged. Catalytic converter 32 can also be a reducing catalyst which converts CO to CO₂ by reacting CO with any NO or NO₂ that may remain in the exhaust before being discharged.

Thus, while exhaust gas recirculation is used in the present invention to reform the fuel to provide hydrogen and carbon monoxide, and to provide charge dilution to achieve low or near-zero NOₓ emissions, a control level of lean burn can be used to provide sufficient oxygen in the exhaust gas for purposes of controlling the amount of partial oxidation reformation in the reactor and for converting carbon monoxide to carbon dioxide in catalytic converter 32. Lean burn conditions are used to provide from about 0.25 to about 4% oxygen in the exhaust gas entering reactor 4. For purposes of the invention, the amount of lean burn required is obtained by regulating the amount of fuel introduced to the reactor. The appropriate amount of fuel can be determined by an oxygen sensor placed in exhaust stream 24 or 26 of Fig. 1. Or, the amount of fuel can be regulated by knowing the mass flow rate of air and fuel. If the exhaust gas is not mixed with gaseous fuel in the reactor, then a metered amount of oxygen or air can be introduced to the reactor 4 with the fuel and water required for reformation.

In the present invention, the amount of carbon monoxide entering catalytic converter 32 will range between 7000 to 200 ppm between the limits of 0 to 4% oxygen that exists in exhaust streams 24 and 26.

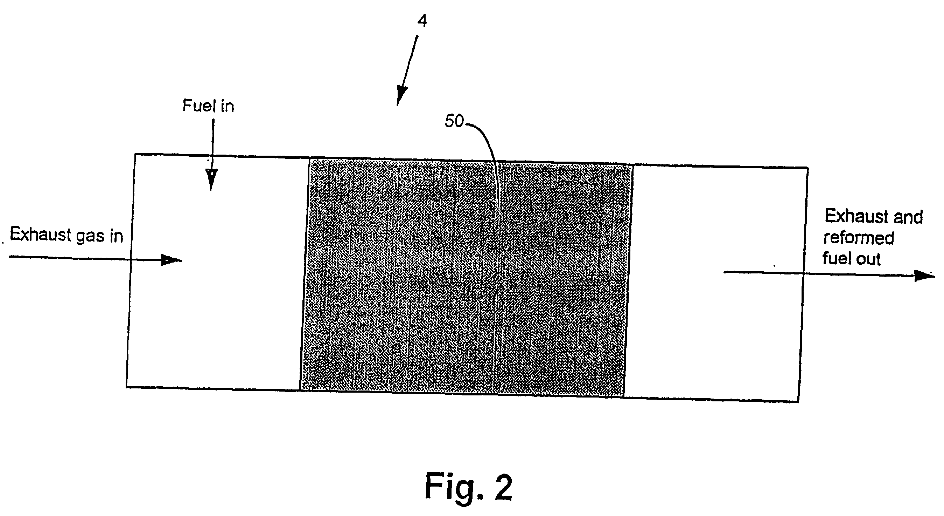

It should be noted that charge dilution occurs when exhaust gas is recirculated and combined with the gaseous fuel in a reformer reactor as shown in Fig. 2. In reformer reactor 4 of Fig. 2, exhaust gas being recirculated is commingled with fuel before passing over catalyst bed 50 where reforming occurs and at least a portion of the fuel is reformed to hydrogen and carbon monoxide. The reformed fuel diluted with exhaust gas is directed to a combustion zone of the engine. Thus, it will be seen that significant dilution of the fuel charge can be achieved to produce exhaust gas having near-zero NOₓ.

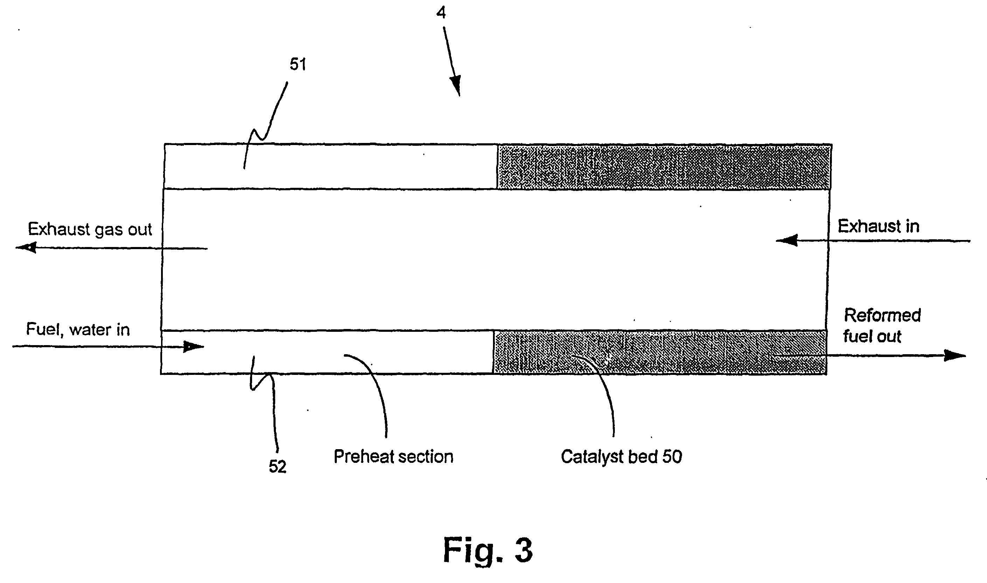

Referring now to Fig. 3, it will be noted that reformation can be accomplished without diluting the combustion charge with exhaust gas. In reformer reactor 4, the catalyst bed 50 is contained between two concentric cylinders and the fuel, water and air are introduced to catalyst bed 50 between the cylinders. Exhaust gas is shown introduced to the inside of the smaller cylinder and is used for preheating the fuel and water as well as the catalyst bed for purposes of reforming the fuel. The exhaust gas can then be discharged or a portion thereof commingled with the reformed fuel for charge dilution, if desired. The reformed fuel can be withdrawn from the catalyst bed separate from the exhaust gas, if desired.

While the invention has been described mainly with respect to natural gas, it will be understood that the invention has application to any hydrocarbon fuel. As used herein, hydrocarbon fuel includes natural gas, propane, butanes, pentanes, hexanes, heavier hydrocarbons, and carbon dioxide, and is free of methanol. It should be understood that hydrocarbon fuels often have impurities, but alcohols are not acceptable impurities. While natural gas is comprised mainly of methane, it can include minor amounts of ethane, propane, butanes, pentanes, hexanes, heavier hydrocarbons, and carbon dioxide and such is included within the definition of natural gas as used herein. Natural gases useful in the present invention include, but are not limited to, landfill gas and wellhead gas. By the use ofthe term gaseous fuel as used herein is meant to include natural gas and any of the constituents comprising natural gas, as for example, propane gas which can be made available as liquid propane. Examples of heavier hydrocarbons that may be present in hydrocarbon fuel and natural gas are provided in Table 2.

Reactor or reformer 4 is comprised of any suitable catalyst coated on rashig rings or a similar carrier or the catalyst may be coated on a monolith comprised of cordierite or other appropriate material. The catalyst may be comprised of any metal which promotes the reformation reaction. The preferred catalyst is nickel.

Reactor 4 may be operated at a temperature which suitably reforms a substantial amount of natural gas into hydrogen and carbon monoxide. The ratio of gaseous fuel to exhaust gas entering reactor 4 is important and the ratio can range from about 0.02 to about 0.35.

The desired molar ratio of methane to hydrogen plus carbon monoxide is about 2.4. However, depending upon the power requirements of the engine, the ratio can increase to 4 when the specific power requirements of the engine are low. More broadly, this ratio can range from about 1 to about 4. The temperature of operation of reactor 4 can range from about 450° to about 800 °C, depending to some extent on the space velocity within the reactor and the amount of reformation. It is preferred to operate the reactor at the highest possible temperature for reformation purposes. However, higher reactor temperatures can result in higher NOₓ emissions. Thus, a preferred range of operation for the reactor ranges from about 500° to about 600 °C.

For purposes of reforming natural gas, heat is supplied by the exhaust gases introduced along lines 28 and 30. However, the natural gas may also be heated prior to being introduced to reformer 4. That is, the natural gas may be preheated in a heat exchanger using heat from the exhaust gases or using heat from the reformed fuel in line 6.

In the present invention, fuel gases exiting reformer 4 or reformed gases have a temperature in the range of 400° to 600 °C and typically can contain 1 to 10 molar percent water. It should be noted that it is preferred to cool the reformed gases for purposes of increasing the charge density of gases entering engine 22 for purposes of increasing maximum power output as well as inhibiting engine knock. Further, it is important to cool the reformed gases in order to condense out water contained therein to avoid its interference with engine performance. Preferably, the reformed gases exiting reformer 4 are cooled in condenser 8 to a temperature in the range of 55° to 120 °F.

As noted earlier, the reformed gases are mixed with air for purposes of combustion in internal combustion engine 22. For purposes of the present invention, the reformed gases are combined with air in a ratio of reformed gases to air ranging from about 0.2 to about 1, preferably in a range from 0.4 to 0.67, for introduction to internal combustion engine 22.

It will be understood that the invention can be applied to different kinds of internal combustion engines, including without limitation reciprocating piston engines, rotary engines and gas turbine engines.

While two lines 28 and 30 are shown in Fig. 1, the exhaust gas recirculation to reformer 4 can be adjusted upward or downward as required. Thus, the exhaust gas recirculation to reformer 4 ranges from about 25 to about 65%, preferably 30 to 60%, of the total exhaust gases leaving engine 22.

In the present invention, the exhaust gases leaving engine 22 are comprised mainly of carbon dioxide, carbon monoxide, nitrogen, and water vapor. Typically, the amount of carbon dioxide ranges from about 5 to about 6%, the amount of nitrogen ranges from about 74 to about 79%, and the amount of water vapor ranges from about 6 to about 12%.

The present invention has the ability to operate an internal combustion engine to produce an exhaust gas having near-zero NOₓ. By the term near-zero NOₓ is meant that the exhaust gas contains less than about 10 ppm NOₓ. By the term near-zero CO is meant that the exhaust gas discharged to the atmosphere has less than 10 ppm CO, preferably less than 5 ppm CO.

Water vapor (or steam) and energy necessary for the reforming is supplied at least in part by the exhaust gases from the internal combustion engine. Means are provided for mixing the gaseous mixture exiting the reactor with air to provide a combustible gaseous combination and supplying the combustible combination to a combustion zone of the internal combustion engine where it is combusted to produce exhaust gases. Means are provided for recycling at least a portion of the exhaust gases to the reactor and for discharging the remainder of the exhaust gases to the atmosphere, the exhaust gases containing reduced NOₓ.

The present invention also provides for an improved combustion engine which emits an exhaust gas containing reduced amounts of both NOₓ and CO. The engine is in fluid communication with a reactor for reforming at least a portion of the hydrocarbon fuel for combustion in the engine. Means are provided for introducing gaseous fuel to the reactor for reforming and means is provided for recycling a portion of the exhaust gas from the internal combustion engine to the reactor for reforming at least 10% of the gaseous fuel. Further, means are provided in the reactor for catalytically steam reforming and partial oxidation reforming (autothermal reformation) the gaseous fuel, e.g., natural gas or propane gas, in the presence of or with the use of the exhaust gas to form a gaseous mixture comprised of hydrogen, steam, nitrogen, carbon dioxide, and carbon monoxide and any unreformed gas such as methane or propane.

Table 1 shows the results of experiments using a reactor consisting of a column packed with nickel coated alumina rashig rings having a size of 5/16 inch by 5/16 inch. The column was 4 inches in diameter and 24 inches long. Engine exhaust gases were passed through the reactor and methane gas was added upstream. Table 1 shows the composition of the gases entering and exiting the reactor. The results show that methane to hydrogen ratios are attainable which support combustion of highly diluted combustible mixtures. Table 1 shows that all oxygen in the exhaust gas entering the reactor is fully reacted and that carbon monoxide reactions with steam are dominant. That is, for every mole of methane reacted, two moles of hydrogen and one mole of carbon monoxide are produced. Considering the concentration of hydrogen exiting the reactor, it will be seen that the amount of carbon monoxide is extremely low which indicates that most of the carbon monoxide formed reacted with available steam to produce additional hydrogen and carbon dioxide.

**TABLE 1 -**

| Results of Reactor Test | | | | | | | | | | | |
|---|---|---|---|---|---|---|---|---|---|---|---|
| Exhaust Gas Flow (g/sec) | Methane Flow (g/sec) | Oxygen In (%) | Oxygen Out (%) | Temp. In (°C) | Temp. Out (°C) | CO₂ In (%) | CO₂ Out (%) | H₂ Out (%) | CO Out (%) | CH₄ Out (%) | CH₄/H₂ Ratio |
| 6.98 | 0.41 | 4.1 | 0.0 | 580 | 535 | 6.5 | 13.2 | 12.7 | 0.55 | 2.3 | 0.18 |
| 6.86 | 0.34 | 0.4 | 0.0 | 575 | 492 | 8.4 | 10.5 | 12.5 | 0.37 | 1.6 | 0.13 |

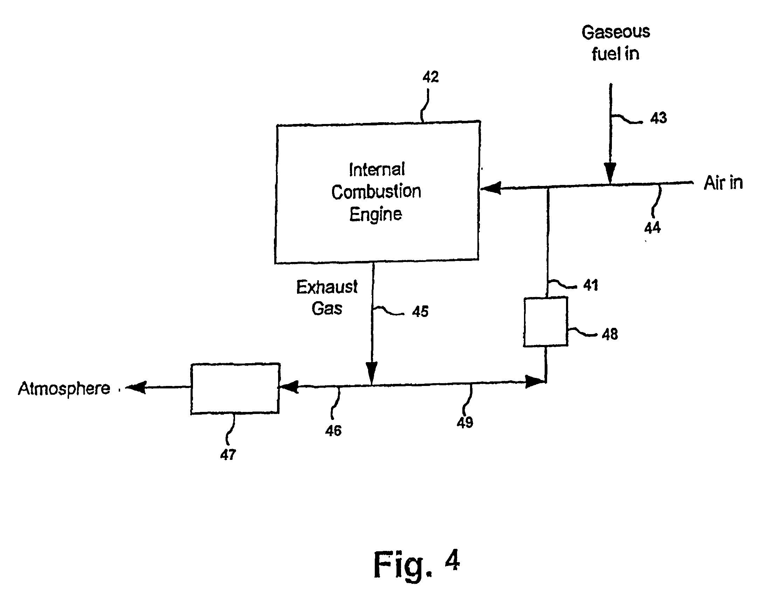

Referring now to Fig. 4, there is illustrated a second embodiment for operating an internal combustion engine to produce exhaust gases having low emissions. In this embodiment the exhaust gas has both near-zero NOₓ and near-zero CO emissions. In Fig. 4 there is provided an internal combustion engine 42. A gaseous fuel is introduced to internal combustion engine 42 along line 43 and line 44. Air is shown being introduced along line 44. While gaseous fuel is shown for convenience being introduced along lines 43 and 44, it will be understood that the fuel can be introduced to a combustion chamber of internal combustion engine 42 independent of air line 44. After combustion of the fuel and air mixture, exhaust gases are removed from internal combustion engine 42 along line 45. A first portion of the exhaust gas is recirculated along line 41 and reintroduced with the gaseous fuel to internal combustion engine 42. A second portion of exhaust gas is directed along line 46 into catalytic converter 47 which uses an oxidizing or three-way catalyst before being discharged to the atmosphere. A heat exchanger 48 may be provided in exhaust gas recirculation line 49 for purposes of reducing the temperature of the recirculated exhaust gases. Reducing the temperature of the exhaust gases will increase the volumetric efficiency of the engine. The term volumetric efficiency is used to describe the amount of gases an internal combustion engine can process in one cycle. The higher the volumetric efficiency, the greater the amount of fuel which can be added for the same equivalence ratio and thus the greater power output of the engine. Heat exchanger 48 also operates to remove water from the recirculated exhaust gases. Heat exchanger 48 may be cooled using ambient air, engine cooling liquid or other cooling means.

In the embodiment illustrated in Fig. 4, the hydrocarbon fuel comprises natural gas, hydrogen and/or carbon monoxide. The amounts of these constituents can vary, depending on the source of the natural gas. Hydrocarbon fuel useful in this embodiment of the invention includes hydrogen and optionally carbon monoxide to extend the combustion limit of the natural gas under large amounts of exhaust dilution to produce near zero NOₓ.

The hydrocarbon fuel should comprise from about 20 to.about 60 vol.% hydrogen, the remainder natural gas. Carbon monoxide can be used to replace a portion of the hydrogen. If carbon monoxide is combined with hydrogen, the molar amount of both should also range from about 20 to about 60 vol.%. If hydrogen is replaced by carbon monoxide then an equivalent amount should be used. That is, either hydrogen or carbon monoxide or a combination of both can be added to a fuel charge of natural gas to eliminate engine misfire under exhaust gas charge dilution to produce near zero NOₓ.

For purposes of operating the internal combustion engine under conditions that produce near-zero carbon monoxide in the exhaust discharged, the engine is operated at an equivalence ratio, Φ, ranging from about 1.02 to about 0.70, preferably ranging from 1.02 to 0.80, depending upon the type of exhaust catalyst used. For purposes of operating the internal combustion engine under conditions that produce near-zero NOₓ in the exhaust discharge, the engine is operated at air plus recirculated exhaust to gaseous fuel equivalence ratios, Φ, ranging from about 0.8 to about 0.45, preferably ranging from 0.65 to 0.52.

In accordance with the present invention, 30 to 50 vol.% of the exhaust gas emitted from internal combustion engine 42 is recirculated and added to the gaseous fuel/air mixture for purposes of dilution of the mixture for purposes ofproviding near-zero NOₓ in the exhaust gases.

The second portion of the exhaust gas to be discharged to the atmosphere is first forwarded along line 46 for treatment in catalytic reactor 47. Catalytic reactor 47 oxidizes the carbon monoxide in the exhaust to carbon dioxide by use of either the excess oxygen resulting from lean burn or reaction with remaining NOₓ resulting from stoichiometric operation. Accordingly, carbon monoxide is converted to carbon dioxide before the second portion of the exhaust gas is discharged to the atmosphere. Catalytic reactor 47 can be comprised of a bed of particles or extruded parallel channels. The base material for the particles and the channels can be any suitable refractory material such as alumina or cordierite. The catalyst is coated on the base material and can comprise platinum, palladium, rhodium, or a mixture thereof. Typically, the amount of carbon monoxide entering reactor 47 is less than 1000 ppm and typically the amount leaving the reactor is less than 5 ppm. Further, the operating temperature of the reactor is typically greater than 300 °C.

This embodiment of the present invention provides for an improved internal combustion engine which discharges exhaust gases to the atmosphere having reduced amounts of NOₓ and carbon monoxide. A portion of the engine exhaust gases are recirculated and introduced with gaseous fuel comprised of natural gas, hydrogen and/or carbon monoxide to provide for near-zero NOₓ in gas emitted from the engine. Further, the mixture of recirculated exhaust gas, natural gas, hydrogen and air is blended to produce less than 4% oxygen in the exhaust gas. As noted, the oxygen can be used to oxidize carbon monoxide to carbon dioxide in an oxidizing catalytic reactor before the second portion of the exhaust gas is discharged to the atmosphere. Means are provided for recycling a portion of the exhaust gas and means are provided for blending or mixing the recycled exhaust gas with air the fuel feed. Further, fuel feed means are provided for introducing the mixture to the internal combustion engine. Additional means are provided for treating the remaining or second portion of the exhaust gas to react carbon monoxide therein with oxygen or NOₓ to convert the carbon monoxide to carbon dioxide before discharging to the atmosphere. The exhaust gases discharged to the atmosphere have both near-zero NOₓ and near-zero CO.

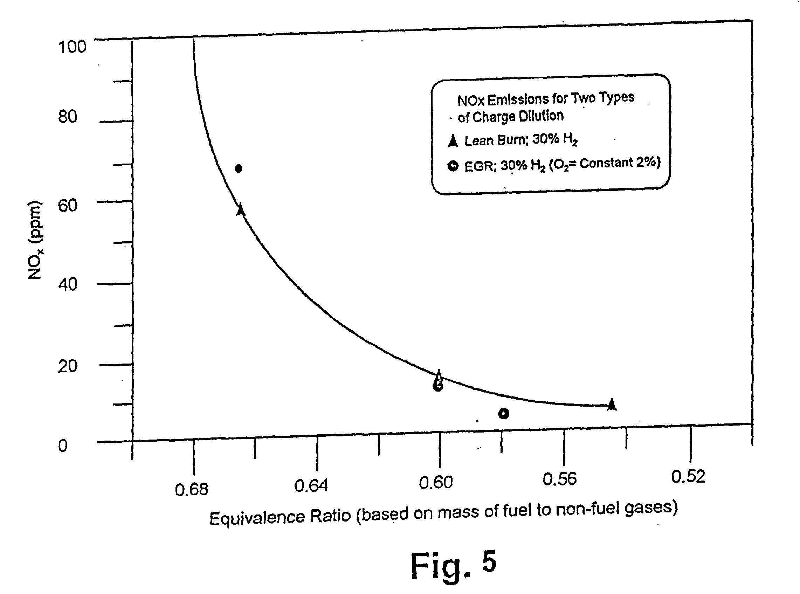

Fig. 5 shows a comparison between NOₓ reduction using only lean burn and a combination of exhaust gas recirculation with moderate lean burn. In both cases, the fuel is a mixture of 70% natural gas and 30% hydrogen by volume. The equivalence ratio in Fig. 5 is calculated on the basis of stoichiometric weight based on the air to fuel ratio divided by the ratio of actual weight of air and exhaust gas to weight of fuel. Fig. 5 shows that NOₓ emissions of less than 10 ppm can be obtained by operating an internal combustion engine at very low equivalence ratios obtained by exhaust gas recirculation (FOR) with only 2% exhaust gas oxygen.

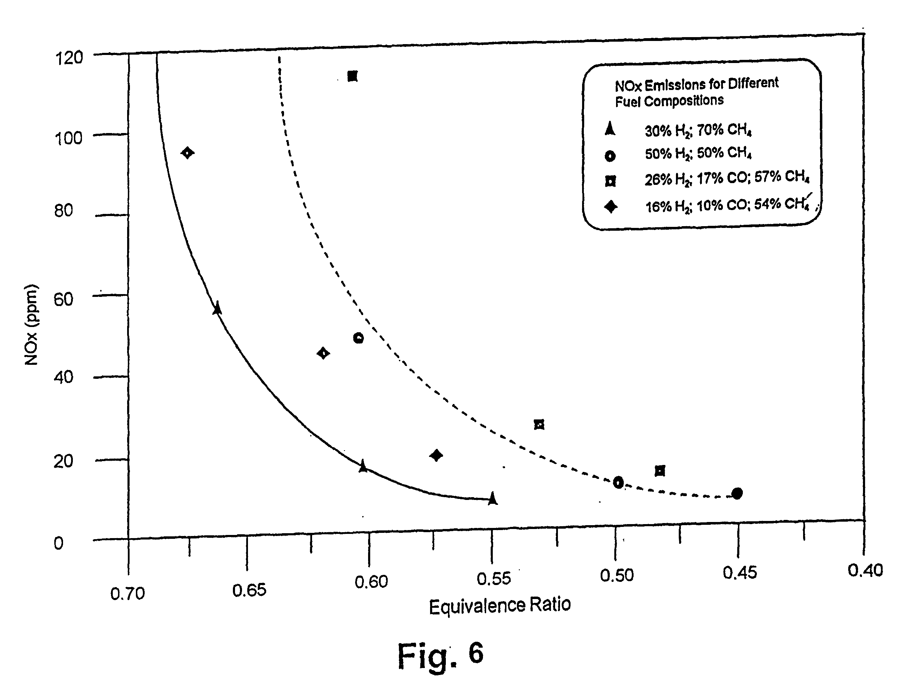

Fig. 6 is a comparison of the effectiveness of adding only hydrogen to natural gas to extend the combustion limit to adding an equivalent molar concentration ofhydrogen and carbon monoxide. The equivalence ratio in Fig. 6 is calculated similarly to that described with respect to Fig. 5 except that no exhaust gas recirculation was used for the data shown. Fig. 6 shows that the NOₓ formation compared to equivalence ratio for a fuel consisting of 30% hydrogen and 70% natural gas is approximately equivalent to a 26% mixture of hydrogen and carbon monoxide and 74% natural gas. Also, Fig. 6 shows that the NOₓ formation compared to equivalence ratio for a fuel consisting of 50% hydrogen and 50% natural gas is approximately equivalent to a 43% mixture of hydrogen and carbon monoxide and 57% natural gas. Thus, this data shows that NOₓ emissions can be reduced to less than 10 ppm when a mixture of hydrogen and carbon monoxide is added to natural gas in sufficient quantity to allow engine operation at very low equivalence ratios.

In a third embodiment of the present invention, natural gas may be subjectto octane enhancement by selective reformation prior to being combusted in internal combustion engine 2, shown in Fig. 1. The natural gas is reformed in the present invention to improve the octane rating. Natural gas as a fuel for internal combustion engines has the problem that it is comprised of many constituents with the major constituent being methane. Methane is the most desirable material because it has the highest octane rating. The remaining constituents in natural gas such as ethane, propane, butanes, etc. (see Table 2), which have higher carbon numbers, have lower octane ratings. Thus, because such constituents can vary in amount, the octane rating of natural gas can vary substantially, depending on the source ofthe natural gas. It will be understood that the octane rating is important in determining the power, efficiency and reliability of the internal combustion engine. For efficiency and reliability of the internal combustion engine, the octane rating must be as high and consistent as possible. It will be appreciated that natural gas is not consistent in composition or octane rating because of the constituents other than methane. Thus, in accordance with this embodiment of present invention, it is desirable to selectively reform natural gas to convert the low octane rating constituents therein to at least one of hydrogen, carbon monoxide and/or carbon dioxide and yet retain substantially all the methane which is the highest octane constituent. This permits the internal combustion engine fueled by the reformed natural gas to be set for high performance and efficiency. It should be noted that both hydrogen and carbon monoxide are both excellent anti-knock resistant fuels, and are superior to that of the higher chain compounds present in the natural gas. Thus, the reformation of natural gas in accordance with this embodiment of the invention provides a fuel having a consistently higher octane rating, regardless of the source of the natural gas.

In this embodiment, the natural gas can be selectively reformed by utilizing steam, partial oxidation, thermocatalytic, or high temperature reformation which causes thermal decomposition of higher hydrocarbons without substantially decomposing methane. Selective steam reformation of natural gas includes reacting hydrocarbon compounds having carbon numbers of two or more with water in the presence of a catalyst at a controlled elevated temperature to form hydrogen, carbon monoxide and/or carbon dioxide, depending on the amount of water present. The selective reformation is controlled to substantially omit methane from the reforming process. Partial oxidation reformation in the present invention includes reacting hydrocarbons other than methane in natural gas with controlled amounts of oxygen and controlled temperature to form hydrogen and carbon monoxide. The partial oxidation process is controlled to minimize or eliminate methane from the oxidation process. Thermocatalytic reformation of natural gas includes subjecting the gas to high temperatures to form hydrogen and carbon from hydrocarbons having two or more carbons and minimize any change in methane in the gas. Thus, the reformation reactor of this embodiment of the invention can be any of these reactor types. Further, as noted, some degree of reformation of methane may take place but should be minimized to obtain the highest octane rating for the fuel. Also, care should be taken to avoid excessive hydrogen generation in the reformation process because this can cause conventional internal combustion engines to perform poorly. Thus, the level of hydrogen should be controlled to suit the design of the particular internal combustion engine used. Typically, the molar concentration of hydrogen should not exceed 60% of the fuel's molar concentration.

A natural gas was selectively reformed in accordance with the invention by using steam reformation to determine if hydrocarbons other than methane could be reacted. The apparatus used is shown in Fig. 4. The test was performed to determine if a gas, such as natural gas, having wide ranging mixtures of hydrocarbons could be selectively reformed to provide methane as the only significant remaining hydrocarbon in the reformed gas. For purposes of the test, both gases entering and leaving the reactor were analyzed in a thermal conductivity gas analyzer (GPA 2186-86 physical constants per GPA 2145-93 and calculations per GPA 2172-86). The amount of CO, H₂, H₂S and H₂O were not measurable using this procedure. However, the test was successful in determining that higher number hydrocarbons could be reacted without reacting methane.

Thus, only nitrogen, methane, carbon dioxide and the higher hydrocarbons were measured. From Table 2, it will be seen that the higher hydrocarbons starting with ethane were reacted. That is, the level of the higher hydrocarbons in the natural gas was measured prior to selective reformation and the levels of such hydrocarbons were measured after reforming. It will be seen from Table 2 that no detectable levels of ethane or higher hydrocarbons remained in the reformed natural gas. Thus, it will be seen from Table 2 that higher hydrocarbons in natural gas can be selectively reformed without any substantial reformation of methane to provide a reformed fuel having an increased octane rating. It should be noted that the relative amounts of nitrogen, methane and carbon dioxide appear to increase. However, this results from the manner in which the concentrations were defined. That is, the reformation of a hydrocarbon results in an increase in the total number of moles present which is a function of the particular hydrocarbon. For example, one mole of propane reacts with six moles of water to create seven moles hydrogen and three moles carbon monoxide. Therefore, seven moles going into the reactor react to create ten moles leaving.

**Table 2**

| Chemical Species | Mole% (entering reactor) | Mole% (leaving reactor) |
|---|---|---|
| Nitrogen | 3.1401 | 24.990 |
| Methane | 42.1290 | 59.154 |
| Carbon Dioxide | 1.1549 | 15.856 |
| Ethane | 16.4365 | 0.000 |
| Propane | 18.7463 | 0.000 |
| Iso-Butane | 2.3501 | 0.000 |
| n-Butane | 8.2676 | 0.000 |
| Isopentane | 2.1148 | 0.000 |
| n-Pentane | 2.2116 | 0.000 |
| Neo-Hexane | 0.0045 | 0.000 |
| Cyclopentane | 0.2149 | 0.000 |
| 2-Methylpentane | 0.3034 | 0.000 |
| 3-Methylpentane | 0.2236 | 0.000 |
| n-Hexane | 0.3296 | 0.000 |
| Methylcyclopentane | 0.4499 | 0.000 |
| Benzene | 0.0370 | 0.000 |
| Cyclohexane | 0.2138 | 0.000 |
| 2-Methylpentane | 0.0505 | 0.000 |
| 3-Methylpentane | 0.0805 | 0.000 |
| Dimethylcyclopentane | 0.3530 | 0.000 |
| Heptanes | 0.0744 | 0.000 |
| n-Heptane | 0.1230 | 0.000 |
| Methylcyclohexane | 0.2220 | 0.000 |
| Toluene | 0.0482 | 0.000 |
| Octanes | 0.3265 | 0.000 |
| n-Octane | 0.0546 | 0.000 |
| Ethylbenzene | 0.0141 | 0.000 |
| . P-M-Xylene | 0.0210 | 0.000 |
| O-Xylene | 0.0084 | 0.000 |
| Nonanes | 0.1258 | 0.000 |
| n-Nonane | 0.0173 | 0.000 |
| Decanes | 0.0690 | 0.000 |
| n-Decane | 0.0111 | 0.000 |
| Higher than C10 | 0.0729 | 0.000 |

While the invention has been described in terms of preferred embodiments, the claims appended hereto are intended to encompass other embodiments which fall within the spirit of the invention.

## Claims

1. A method of producing near-zero NOₓ and near-zero CO emissions in exhaust gas from an internal combustion engine using a gaseous fuel wherein the exhaust gas includes water vapor, the method comprising the steps of:
(a) providing an internal combustion engine having an intake for fuel and having an exhaust gas;
(b) providing a gaseous fuel comprised of natural gas and at least one additional gas selected from hydrogen and CO and adding the gaseous fuel to the engine;
(c) recirculating a first portion of the exhaust gas, cooling the first portion of exhaust gas to condense at least a portion of the water vapor, removing the condensed water from the first portion of exhaust gas, and adding the first portion of exhaust gas to the engine;
(d) discharging a second portion of the exhaust gas, to the atmosphere;
(e) operating the engine to combust a charge of the gaseous fuel and air, the charge diluted with the first portion of exhaust gas, the operating being carried out;
(i) under exhaust gas recycle conditions which product near-zero NOₓ emissions in the exhaust gas emitted from the engine; and
(ii) under lean burn conditions to provide oxygen in the exhaust gas emitted from the engine; and
(f) oxidizing CO in the second portion of the exhaust gas using an oxidizing catalyst to product near-zero CO emission in the second portion of the exhaust gas discharged to the atmosphere.

2. The method of claim 1 wherein the first portion of exhaust recycled comprises 30 to 50% of the exhaust gas emitted from the engine and the engine is operated under lean-burn conditions at an air and fuel equivalence ratio in the range of 0.99 to 0.7 with up to 4% oxygen in the exhaust gas.

3. The method of any one of claims 1 or 2, wherein the gaseous fuel is produced by reformation of natural gas and the first portion of the exhaust gas.

4. The method of claim 3 wherein the gaseous fuel is produced by selective reformation in which substantially all hydrocarbons in the natural gas except methane are reformed to hydrogen and carbon monoxide.

5. A method of operating an engine comprising the steps of:
(a) providing an engine;
(b) providing a source of gaseous fuel for powering the engine;
(c) providing a reactor in fluid communication with the engine;
(d) recycling a first portion of an exhaust gas from the engine to the reactor;
(e) adding gaseous fuel to the reactor;
(f) steam reforming the gaseous fuel in the reactor at an oxygen level lower than the lower flammability limit of the gaseous fuel using the first portion of the exhaust gas as a source of heat and water to form a gas mixture comprised of methane, hydrogen and carbon monoxide;
(g) combining the gas mixture from the reactor with air to provide a combination mixture; and
(h) combusting the combination mixture in a combustion zone in the engine to produce the first portion of the exhaust gas and a second portion of the exhaust gas, wherein the first portion of the exhaust gas contains up to about 4% oxygen by volume and the second portion of the exhaust gas has near-zero NOx.

6. The method of claim 5 including cooling the gas mixture leaving the reactor and removing water of condensation therefrom.

7. The method of any of claims 5 or 6 further comprising the step of converting carbon monoxide in the second portion of the exhaust gas to carbon dioxide to provide a vented exhaust gas having near-zero carbon monoxide.

8. The method of any of claims 1 through 7 wherein the engine comprises at least two combustion chambers, the method further comprising the steps of producing the first portion of the exhaust gas from at least one combustion chamber and producing the second portion of the exhaust gas from the remaining combustion chamber or chambers.

9. The method of claim 5 wherein the gaseous fuel is natural gas.

10. The method of claim 9 wherein the reforming step is a selective reforming step in which substantial all hydrocarbons in the natural gas except methane are reformed to provide a gaseous fuel comprised of methane, hydrogen and carbon monoxide.

## Patentansprüche

1. Verfahren zur Erzeugung von nahezu null betragenden NOₓ- und nahezu null betragenden CO-Emissionen im Abgas eines Verbrennungsmotors unter Verwendung eines gasförmigen Kraftstoffs, bei dem das Abgas Wasserdampf beinhaltet, wobei das Verfahren folgende Schritte umfaßt:
(a) Bereitstellen eines Verbrennungsmotors mit einem Einlaß für Kraftstoff und mit einem Abgas;
(b) Bereitstellen eines gasförmigen Kraftstoffs, der Erdgas und mindestens ein aus Wasserstoff und CO ausgewähltes zusätzliches Gas umfaßt, und Hinzufügen des gasförmigen Kraftstoffs zum Motor;
(c) Rückführen einer ersten Teilmenge des Abgases, Kühlen der ersten Teilmenge des Abgases, um mindestens eine Teilmenge des Wasserdampfs zu kondensieren, Entfernen des kondensierten Wassers aus der ersten Teilmenge des Abgases und Hinzufügen der ersten Teilmenge des Abgases zum Motor;
(d) Austragen einer zweiten Teilmenge des Abgases in die Atmosphäre;
(e) Betreiben des Motors, um eine aus dem gasförmigen Kraftstoff und Luft bestehende Ladung, die mit der ersten Abgasteilmenge verdünnt ist, zu verbrennen, wobei das Betreiben durchgeführt wird:
(i) unter Bedingungen einer Abgasrückführung, die im aus dem Motor ausgetragenen Abgas nahezu null betragende NOₓ-Emissionen erzeugen; und
(ii) unter Bedingungen einer mageren Verbrennung, um im aus dem Motor ausgetragenen Abgas Sauerstoff bereitzustellen; und
(f) Oxidieren des CO in der zweiten Abgasteilmenge unter Verwendung eines oxidierenden Katalysators, um in der in die Atmosphäre ausgetragenen zweiten Abgasteilmenge eine nahezu null betragende CO-Emission zu erzeugen.

2. Verfahren nach Anspruch 1, bei dem die erste Teilmenge des rückgeführten Abgases 30 bis 50% des aus dem Motor ausgetragenen Abgases umfaßt und der Motor unter Bedingungen einer mageren Verbrennung mit einem Luft/Kraftstoff-Äquivalenzverhältnis im Bereich von 0,99 bis 0,7 mit bis zu 4% Sauerstoff im Abgas betrieben wird.

3. Verfahren nach einem der Ansprüche 1 oder 2, bei dem der gasförmige Kraftstoff durch Reformieren von Erdgas und der ersten Teilmenge des Abgases erzeugt wird.

4. Verfahren nach Anspruch 3, bei dem der gasförmige Kraftstoff durch selektives Reformieren erzeugt wird, wobei im wesentlichen alle im Erdgas enthaltenen Kohlenwasserstoffe, mit Ausnahme von Methan, zu Wasserstoff und Kohlenmonoxid reformiert werden.

5. Verfahren zum Betreiben eines Motors, das folgende Schritte umfaßt:
(a) Bereitstellen eines Motors;
(b) Bereitstellen einer Quelle für gasförmigen Kraftstoff zum Antreiben des Motors;
(c) Bereitstellen eines in Fluidverbindung mit dem Motor stehenden Reaktors;
(d) Rückführen einer ersten Teilmenge eines Abgases vom Motor zum Reaktor;
(e) Hinzufügen von gasförmigem Kraftstoff zum Reaktor;
(f) Dampfreformieren des gasförmigen Kraftstoffs im Reaktor mit einem unter der unteren Entzündbarkeitsgrenze des gasförmigen Kraftstoffs liegenden Sauerstoffpegel, wobei die erste Teilmenge des Abgases als eine Wärmequelle und Wasser zur Bildung eines Methan, Wasserstoff und Kohlenmonoxid umfassenden Gasgemisches verwendet wird;
(g) Kombinieren des Gasgemisches aus dem Reaktor mit Luft, um ein Kombinationsgemisch bereitzustellen; und
(h) Verbrennen des Kombinationsgemisches in einer Verbrennungszone im Motor, um die erste Teilmenge des Abgases und eine zweite Teilmenge des Abgases zu erzeugen, wobei die erste Teilmenge des Abgases bis zu etwa 4 Volumenprozent Sauerstoff und die zweite Teilmenge des Abgases nahezu null betragendes NOₓ enthält.

6. Verfahren nach Anspruch 5, das das Kühlen des aus dem Reaktor austretenden Gasgemisches und das Entfernen von Kondenswasser daraus beinhaltet.

7. Verfahren nach einem der Ansprüche 5 oder 6, das weiterhin den Schritt des Umwandelns von Kohlenmonoxid in der zweiten Teilmenge des Abgases zu Kohlendioxid umfaßt, um ein austretendes Abgas mit nahezu null betragendem Kohlenmonoxid bereitzustellen.

8. Verfahren nach einem der Ansprüche 1 bis einschließlich 7, bei dem der Motor mindestens zwei Brennkammern umfaßt, wobei das Verfahren weiterhin die Schritte des Erzeugens der ersten Teilmenge des Abgases aus mindestens einer Brennkammer sowie des Erzeugens der zweiten Teilmenge des Abgases aus der verbleibenden Brennkammer bzw. den verbleibenden Brennkammern umfaßt.

9. Verfahren nach Anspruch 5, bei dem es sich bei dem gasförmigen Kraftstoff um Erdgas handelt.

10. Verfahren nach Anspruch 9, bei dem der Schritt des Reformierens ein Schritt des selektiven Reformierens ist, wobei im wesentlichen alle Kohlenwasserstoffe im Erdgas, mit Ausnahme von Methan, reformiert werden, um einen Methan, Wasserstoff und Kohlenmonoxid umfassenden gasförmigen Kraftstoff bereitzustellen.

## Revendications

1. Procédé de production d'émissions de NOₓ et CO proches de zéro dans un gaz d'échappement d'un moteur à combustion interne utilisant un combustible gazeux où le gaz d'échappement comprend de la vapeur d'eau, le procédé comprenant les étapes consistant à :
(a) fournir un moteur à combustion interne possédant une admission pour le combustible et possédant un gaz d'échappement ;
(b) fournir un combustible gazeux composé de gaz naturel et d'au moins un gaz supplémentaire choisi entre l'hydrogène et le CO et ajouter le combustible gazeux au moteur ;
(c) recycler une première partie du gaz d'échappement, refroidir la première partie du gaz d'échappement afin de condenser au moins une partie de la vapeur d'eau, retirer la vapeur d'eau de la première partie du gaz d'échappement, et ajouter la première partie de gaz d'échappement au moteur ;
(d) refouler une seconde partie du gaz d'échappement vers l'atmosphère ;
(e) faire fonctionner le moteur afin de brûler une charge du combustible gazeux et de l'air, la charge diluée avec la première partie du gaz d'échappement, le fonctionnement étant exécuté :
(i) sous des conditions de recyclage de gaz d'échappement qui produisent des émissions de NOₓ proches de zéro dans le gaz d'échappement émis par le moteur ; et
(ii) sous des conditions de mélange pauvre afin de délivrer de l'oxygène dans le gaz d'échappement émis par le moteur ; et
(f) oxyder le CO dans la seconde partie du gaz d'échappement utilisant un catalyseur d'oxydation afin de produire une émission de CO proche de zéro dans la seconde partie du gaz d'échappement refoulée vers l'atmosphère.

2. Procédé selon la revendication 1 dans lequel la première partie du gaz d'échappement recyclé comprend 30 à 50 % du gaz d'échappement émis par le moteur et le moteur est utilisé sous des conditions de mélange pauvre selon un rapport d'équivalence air-combustible dans la plage de 0,99 à 0,7 jusqu'à 4 % d'oxygène dans le gaz d'échappement.

3. Procédé selon l'une quelconque des revendications 1 ou 2, dans lequel le combustible gazeux est produit par reformage du gaz naturel et la première partie du gaz d'échappement.

4. Procédé selon la revendication 3, dans lequel le combustible gazeux est produit par reformage sélectif au cours duquel essentiellement tous les hydrocarbures dans le gaz naturel à l'exception du méthane sont reformés en monoxyde d'hydrogène et de carbone.

5. Procédé de fonctionnement d'un moteur comprenant les étapes consistant à :
(a) fournir un moteur ;
(b) fournir une source de combustible gazeux pour alimenter le moteur ;
(c) fournir un réacteur en communication liquide avec le moteur ;
(d) recycler une première partie d'un gaz d'échappement du moteur vers le réacteur ;
(e) ajouter un combustible gazeux au réacteur ;
(f) reformer le combustible gazeux par la vapeur dans le réacteur à un niveau d'oxygène inférieur à la limite d'inflammabilité inférieure du combustible gazeux utilisant la première partie du gaz d'échappement comme source de chaleur et d'eau afin de former un mélange gazeux composé de méthane, d'hydrogène et de monoxyde de carbone ;
(g) combiner le mélange gazeux du réacteur avec l'air afin de fournir un mélange combiné ; et
(h) brûler le mélange combiné dans une zone de combustion dans le moteur afin de produire la première partie du gaz d'échappement et une seconde partie du gaz d'échappement, dans lequel la première partie du gaz d'échappement contient jusqu'à environ 4 % d'oxygène en volume et la seconde partie du gaz d'échappement possède du NOₓ proche de zéro.

6. Procédé selon la revendication 5, comprenant le refroidissement du mélange gazeux quittant le réacteur et l'élimination de l'eau de condensation de celui-ci.

7. Procédé selon l'une quelconque des revendications 5 ou 6, comprenant en outre l'étape consistant à convertir le monoxyde de carbone dans la seconde partie du gaz d'échappement en dioxyde de carbone afin de fournir un gaz d'échappement ventilé possédant du monoxyde de carbone proche de zéro.

8. Procédé selon l'une quelconque des revendications 1 à 7, dans lequel le moteur comprend au moins deux chambres de combustion, le procédé comprenant en outre les étapes consistant à produire la première partie du gaz d'échappement à partir d'au moins une chambre de combustion et à produire la seconde partie du gaz d'échappement à partir de la chambre ou des chambres de combustion restantes.

9. Procédé selon la revendication 5, dans lequel le combustible gazeux est du gaz naturel.

10. Procédé selon la revendication 9, dans lequel l'étape de reformage est une étape de reformage sélectif au cours de laquelle essentiellement tous les hydrocarbures dans le gaz naturel à l'exception du méthane sont reformés afin de fournir un combustible gazeux composé de méthane, hydrogène et monoxyde de carbone.
